# EUROPEAN PATENT SPECIFICATION

(11) **EP 0 477 984 B1**
(45) Date of publication and mention of the grant of the patent: **05.04.1995**
(21) Application number: 91116601.5
(22) Date of filing: 27.09.1991
(51) Int. Cl.: C08L 83/07

(54) **Use of a compression-resistant silicone rubber composition**
Anwendung von einer druckresistenten Siliconkautschukmasse
Emploi d'une composition de caoutchouc silicone résistant à la compression .

(30) Priority: 28.09.1990 JP 262149/90
(43) Date of publication of application: 01.04.1992
(73) Proprietor: Dow Corning Toray Silicone Company, Limited, Tokyo 103 (JP)
(72) Inventor: Nakamura, Akito, Ichihara-shi, Chiba Prefecture (JP); Sato, Takahiro, Ichihara-shi, Chiba (JP)
(74) Representative: Spott, Gottfried, Dr.

(56) References cited:
- EP-A- 0 351 797
- DE-B- 1 066 737
- US-A- 3 020 260
- US-A- 3 498 945
- US-A- 4 045 390

## Description

Silicone rubber compositions which are composed of vinyl-containing organopolysiloxane, SiH-containing organohydrogenpolysiloxane, inorganic filler, and Pt-type catalyst cure by an addition reaction between the vinyl groups and the silicon-bonded hydrogen atoms. These silicone rubber compositions are characterized by an excellent moldability, and they cure to give silicone rubber moldings which have excellent properties (thermal resistance, electrical insulating properties, and so forth). As a consequence, this type of silicone rubber composition is used in large quantities in those sectors where these particular properties are critical.

However, this type of silicone rubber molding has a low resistance to compression, and therefore cannot be directly used in those applications where compression resistance is required. It is already known in the art that the compression resistance can be improved by additionally subjecting the silicone rubber molding (obtained by press molding, injection molding, transfer molding, etc.) to a high-temperature heat treatment (secondary vulcanization or post-cure) at 150 to 250 degrees Celcius, for example, U.S. Pat. No. 3,671,480, issued Jun 20, 1972. This tactic is based on the concept of reducing the quantity of residual unreacted functional groups in the silicone rubber molding and thereby improving the silicone rubber molding's compression resistance. However, this method also requires introduction of the silicone rubber molding into a high-temperature oven for a lengthy heat treatment. This impairs the productivity and burdens the cost structure of the final molded product. As a consequence, there is demand in the art for a compression resistant silicone rubber composition which is free of this problem, that is, which does not require a secondary vulcanization.

Methods of regulating or improving specific properties of silicone compositions cured through the platinum catalyzed reaction of alkenyl functional polydiorganosiloxane and SiH containing silicone or silane crosslinkers are taught in U.S Pat. No. 4,045,390, issued Aug 30, 1977; U.S. Pat. No. 4,340,709, issued Jul, 20, 1982; U.S. Pat. No. 4,535,141, issued Aug. 13, 1985; and U.S. Pat. No. 4,845,164, issued Jul 4, 1989. A composition intended for roll covering is taught in U.S. Pat. No. 4,830,893, issued May 16, 1989. None of these teach that the use of the combination of a polydiorganosiloxane having alkenyl groups in the chain and a polydiorganosiloxane crosslinker having hydrogen only on the terminal groups would give an unexpectedly low compression set in the cured polymer, without the necessity of a post-cure.

US-A 3 498 945 discloses a linear polyorganosiloxane comprising siloxy units bearing pendent vinyl radicals and having optionally vinyl end groups. This linear polyorganosiloxane may be admixed with a linear polyorganosiloxane having Si-H endgroups, a platin catalyst and a filler and reacted to form an elastomer.

Moreover, EP-A 0 351 797 discloses silicone compositions which comprise a polyorganosiloxane bearing pendent vinyl groups, a polyorganosiloxane bearing pendent hydrogen, a platin catalyst and a filler. After vulcanization of this composition an elastomer is obtained.

The present invention takes as its object the introduction of a compression-resistant silicone rubber composition which can be cured to give highly compression-resistant silicone rubber moldings even without the implementation of a secondary vulcanization.

This invention relates to the use of a compression-resistant silicone rubber composition which consists of (A) 100 weight parts polydiorganosiloxane as represented by the following general formula 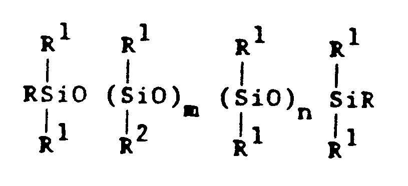
wherein R is C₁ to C₈ alkyl, alkenyl or phenyl, R¹ is C₁ to C₈ alkyl or phenyl and R² is vinyl or allyl, m is an integer with a value of at least 3, and n is an integer with a value of zero or at least 1), (B) polydiorganosiloxane which contains the silicon-bonded hydrogen atom and which is represented by the following general formula 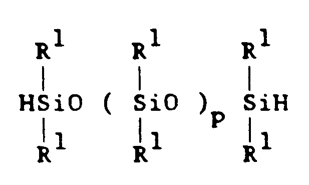
(wherein R¹ is defined as above and p is an integer with a value of zero or at least 1), wherein component (B) is added in a quantity which affords values of (0.5 : 1) to (3 : 1) for the ratio between the number of moles of silicon-bonded hydrogen atoms in component (B) and the number of moles of silicon-bonded alkenyl groups in component (A), (C) 5 to 500 weight parts inorganic filler, and (D) a catalytic quantity of a platinum-type catalyst.

The compression-resistant silicone rubber composition used according to the present invention is composed of components (A) through (D), and in particular it contains a polydiorganosiloxane which contains at least 3 alkenyl groups in each molecule (component (A)) and, as crosslinker, a specified quantity of polydiorganosiloxane having the hydrogen atom directly bonded to both molecular terminals (component (B)). As a consequence of this composition, the compression-resistant silicone rubber composition cures to give silicone rubber moldings which are strongly compression resistant even without a secondary vulcanization.

To explain the preceding in greater detail, the component (A) employed by the present invention is the principal or base component of the composition according to the present invention. The group R in the preceding formula comprises alkyl groups such as methyl, ethyl, propyl, butyl, and octyl; the phenyl group; and alkenyl groups such as vinyl and allyl. The group R¹ comprises monovalent hydrocarbon groups as above with the exclusion of the alkenyl groups (vinyl, allyl, etc.). Among the preceding, the groups R and R¹ are preferably methyl. R² is a vinyl or allyl group. Finally, m is an integer with a value of at least 3 and n is an integer with a value of zero or at least 1. The molecular structure of this polydiorganosiloxane should be straight chain, but a moderately branched molecular structure can also be used.

The component under consideration is concretely exemplified as follows: trimethylsiloxy-terminated dimethylsiloxane-methylvinylsiloxane copolymers and dimethylvinylsiloxy-terminated dimethylsiloxane-methylvinylsiloxane copolymers.

Component (B) functions as a crosslinker for component (A), and the composition according to the present invention cures by this component's addition reaction with component (A) to afford a rubbery elastic material with an excellent compression resistance. The group R¹ in the aforementioned formula is a monovalent hydrocarbon group which corresponds to the group R¹ in component (A) as described above. p should be an integer with a value of zero or at least 1. This polydiorganosiloxane is exemplified by dimethylhydrogensiloxy-terminated dimethylpolysiloxanes and dimethylhydrogensiloxy-terminated dimethylsiloxane-methylphenylsiloxane copolymers.

Component (B) should be added in quantities which give values in the range of (0.5 : 1) to (3 : 1) and preferably in the range of (1 : 1) to (2 : 1) for the ratio between the number of moles of silicon-bonded hydrogen atoms in this component and the number of moles of silicon-bonded alkenyl groups in component (A). At values below 0.5 or in excess of 3, curing of the composition according to the present invention will be unsatisfactory and it will not be possible to obtain strongly compression-resistant silicone rubber moldings.

The inorganic filler comprising component (C) is used mainly in order to raise the mechanical strength of the composition according to the present invention. This inorganic filler is exemplified by reinforcing fillers such as precipitated silica, fumed silica, calcined silica, fumed titanium oxide, and carbon black. Although not strongly reinforcing, extender fillers can be used in order to impart various other properties to the silicone rubber composition. This type of filler is exemplified by quartz powder, diatomaceous earth, asbestos, aluminosilicic acid, iron oxide, zinc oxide, and calcium carbonate. The aforesaid fillers can be used as such without modification, but they may also be used after a surface treatment with an organosilicon compound such as hexamethyldisilazane, trimethylchlorosilane, and organopolysiloxane.

The platinum-type catalyst comprising component (D) is an addition-reaction catalyst which promotes the addition reaction between the polydiorganosiloxane comprising component (A) and the polydiorganosiloxane comprising component (B). The platinum-type catalyst under consideration is exemplified by microparticulate platinum, chloroplatinic acid, alcohol-modified chloroplatinic acid, chelate compounds of platinum, and chloroplatinic acid/olefin coordination compounds. This component should be added in a quantity sufficient to cure the composition according to the present invention, and it is typically added within the range of 0.1 to 100 ppm as platinum metal referred to the total quantity of components (A) plus (B).

The composition according to the present invention is easily obtained simply by mixing the aforesaid components (A) to (D) to homogeneity. However, an additive intended to control or regulate the crosslinking reaction rate may also be added in order to obtain an advantageous or desirable addition-reaction rate. Examples of such additives are acetylenic compounds, hydrazine compounds, triazole compounds, phosphine compounds, and mercaptan compounds. It is also permissible to add, for example, pigments, heat stabilizers, flame retardants, plasticizers, etc., on an optional basis.

The compression-resistant silicone rubber composition according to the present invention as described hereinbefore cures to give a high compression resistance, and it is therefore strongly qualified for application as various types of rolls, for example, fixing rolls, paper-feed and paper-advance rolls, cleaning rolls, and transfer rolls.

The following examples are included for illustrative purposes only and should not be construed as limiting the invention which is properly set forth in the appended claims. All parts are parts by weight, % = weight percent, Vi = vinyl, cp = centipoise, and the viscosity is the value at 25 degrees Celcius.

The compression set was measured in accordance with JIS K 6301 (ASTM D 395), but in the present case using a hot air temperature of 180 degrees Celcius and a treatment time of 22 hours. The hardness was measured in accordance with JIS C 2123 (ASTM D 2240). The test specimens for measurement were prepared by placing the silicone rubber composition between metal dies at 150 degrees Celcius and press-curing for 5 minutes.

### Example 1

First 20 parts dimethyldichlorosilane-treated fumed silica with a specific surface area of 130 m²/g was mixed to homogeneity into 100 parts trimethylsiloxy-terminated dimethylsiloxane-methylvinylsiloxane copolymer (viscosity was 30,000 cp, Si-bonded Vi content was 0.12 percemt). This was followed by heat treatment in vacuo at 170 degrees Celcius for 2 hours. Then 2.6 parts dimethylhydrogensiloxy-terminated dimethylpolysiloxane (viscosity was 10 cp, SiH content was 0.17 percent) and 0.06 parts monomethyltris(methylbutynoxy)silane were then added with mixing to homogeneity. A chloroplatinic acid/tetramethyldivinyldisiloxane complex was added to this mixture so as to give 10 ppm platinum metal with mixing to homogeneity. The product was a silicone rubber composition designated as Sample 1. This silicone rubber composition was thermoset to give the test specimens which were used for measurement of the compression set and hardness. These measurement results are reported in Table 1.

For comparison, a silicone rubber composition (Sample 2) was prepared as above, but adding 0.6 parts trimethylsiloxy-terminated dimethylsiloxane-methylhydrogensiloxane copolymer (viscosity was 5 cp, SiH content was 0.75 percent) in place of the dimethylhydrogensiloxy-terminated dimethylpolysiloxane. Its compression set and hardness were measured as above, and these results are also reported in Table 1.

**Table 1**

| | present invention | comparison example |
|---|---|---|
| | Sample 1 | Sample 2 |
| hardness (JIS A) | 11 | 19 |
| compression set (%) | 7 | 16 |

### Example 2

First 20 parts dimethyldichlorosilane-treated fumed silica with a specific surface area of 130 m²/g was mixed to homogeneity into 100 parts trimethylsiloxy-terminated dimethylsiloxane-methylvinylsiloxane copolymer (viscosity was 30,000 cp, Si-bonded Vi content was 0.5 percent). This was followed by heat treatment in vacuo at 170 degrees Celcius for 2 hours. Then 11 parts dimethylhydrogensiloxy-terminated dimethylpolysiloxane (viscosity was 10 cp, SiH content was 0.17 percent) and 0.06 parts monomethyltris(methylbutynoxy)silane were then added with mixing to homogeneity. A chloroplatinic acid/tetramethyldivinyldisiloxane complex was added to this mixture so as to give 10 ppm platinum metal with mixing to homogeneity. The product was a silicone rubber composition designated as Sample 3. This silicone rubber composition was thermoset to give the test specimens which were used for measurement of the compression set and hardness. These measurement results are reported in Table 2.

For comparison, a silicone rubber composition (Sample 4) was prepared as above, but adding 2.5 parts trimethylsiloxy-terminated dimethylsiloxane-methylhydrogensiloxane copolymer (viscosity was 5 cp, SiH content was 0.74 percent) in place of the dimethylhydrogensiloxy-terminated dimethylpolysiloxane. Its compression set and hardness were measured as above, and these results are also reported in Table 2.

**Table 2**

| | present invention | comparison example |
|---|---|---|
| | Sample 3 | Sample 4 |
| hardness (JIS A) | 44 | 51 |
| compression set (%) | 9 | 18 |

### Example 3

A cylindrical iron roll core was prepared and its surface was painted with a liquid primer whose principal components were methylvinylpolysiloxane gum, methylphenylpolysiloxane resin, ethyl silicate, methylhydrogenpolysiloxane, and titanium acetylacetonate. This was followed by curing. The iron roll core was then placed in the interior of a roll-molding mold. The silicone rubber composition from Example 2 was injected into the cavity of this mold and thermoset for 10 minutes at 150 degrees Celcius. After cooling, the resulting silicone rubber-clad roll was removed and its interior was excised with a knife. The hardness of the various regions was measured (JIS A) and in each case the hardness was 44 degrees. The compression set was 9%.

This silicone rubber-clad roll was used as the pressure roll in the fixing roll section of an electrophotographic copier. Compression set did not appear, and the reproduced image was clear.

## Claims

1. The use of a compression-resistant silicone rubber composition which consists of
(A) 100 weight parts polydiorganosiloxane as represented by the following general formula 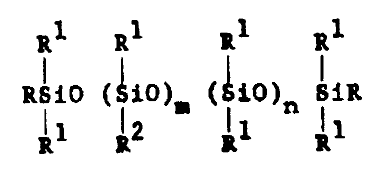 wherein R is C₁ to C₈ alkyl, alkenyl or phenyl, R¹ is C₁ to C₈ alkyl or phenyl and R² is vinyl or allyl, m is an integer with a value of at least 3, and n is an integer with a value of zero or at least 1,
(B) polydiorganosiloxane which contains the silicon-bonded hydrogen atom and which is represented by the following general formula 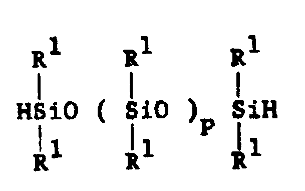 wherein R¹ is defined as above and p is an integer with a value of zero or at least 1 wherein component (B) is added in a quantity which affords values of (0.5 : 1) to (3 : 1) for the ratio between the number of moles of silicon-bonded hydrogen atoms in component (B) and the number of moles of silicon-bonded alkenyl groups in component (A),
(C) 5 to 500 weight parts inorganic filler, and
(D) a catalytic quantity of a platinum-type catalyst, as a silicone rubber composition for covering rolls.

## Patentansprüche

1. Verwendung einer stauchbeständigen Silikonkautschukzusammensetzung bestehend aus
(A) 100 Gew.-Teilen eines Polydiorganosiloxans mit der folgenden allgemeinen Formel: 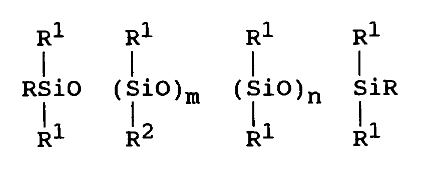 worin R ein C₁-C₈-Alkyl-, Alkenyl- oder Phenylrest ist, R¹ ein C₁-C₈-Alkyl- oder Phenylrest ist und R² ein Vinyl- oder Allylrest ist, m eine ganze Zahl mit einem Wert von mindestens 3 ist und n eine ganze Zahl mit einem Wert von 0 oder mindestens 1 ist,
(B) einem Polydiorganosiloxan, das siliciumgebundene Wasserstoffatome enthält und die folgende allgemeine Formel hat: 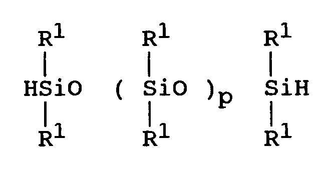 worin R¹ wie oben definiert ist und p eine ganze Zahl mit einem Wert von 0 oder mindestens 1 ist, wobei Komponente (B) in einer solchen Menge zugegeben wird, die Werte von (0,5:1) bis (3:1) für das Verhältnis der Anzahl von Mol siliciumgebundener Wasserstoffatome in Komponente (B) zu der Anzahl von Mol siliciumgebundener Alkenylgruppen in Komponente (A) liefert,
(C) 5 bis 500 Gew.-Teilen anorganischem Füllstoff und
(D) einer katalytischen Menge eines platinhaltigen Katalysators als Silikonkautschukzusammensetzung zur Beschichtung von Walzen.

## Revendications

1. L'emploi d'une composition de caoutchouc de silicone résistant à la compression consistant en :
(A) 100 parties en poids de polydiorganosiloxane représenté par la formule générale suivante 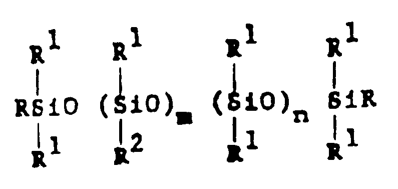 dans laquelle R est un radical alkyle en C₁ à C₈, alcényle ou phényle, R¹ est un radical alkyle en C₁ à C₈ ou phényle et R² est un radical vinyle ou allyle, m est un nombre entier ayant une valeur d'au moins 3, et n est un nombre entier ayant une valeur de zéro ou d'au moins 1,
(B) un polydiorganosiloxane qui contient des atomes l'hydrogène liés au silicium et qui est représenté par la formule générale suivante 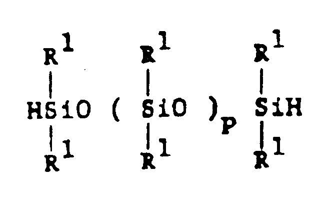 dans laquelle R¹ est défini comme précité et p est un nombre entier ayant une valeur de zéro ou d'au moins 1, dans laquelle le composant (B) est ajouté en une quantité qui donne des valeurs de (0,5 : 1) à (3 : 1) pour le rapport entre le nombre de moles d'atomes d'hydrogène liés au silicium dans le composant (B) et le nombre de moles de groupes alcényles liés au silicium dans le composant (A),
(C) 5 à 100 parties en poids d'une charge minérale, et
(D) une quantité catalytique d'un catalyseur de type platine, comme composition de caoutchouc de silicone pour le recouvrement de rouleaux.
